# EUROPÄISCHE PATENTSCHRIFT

(11) **EP 3 264 047 B1**
(45) Veröffentlichungstag und Bekanntmachung des Hinweises auf die Patenterteilung: **22.08.2018**
(21) Anmeldenummer: 16176855.1
(22) Anmeldetag: 29.06.2016
(51) Int. Cl.: G01D 5/347

(54) **MONTAGEVORRICHTUNG UND VERFAHREN ZUM EINZIEHEN EINES BANDES IN EINE NUT EINES MASSSTABTRÄGERS**
MOUNTING DEVICE AND METHOD FOR DRAWING A BELT INTO A GROOVE OF A SCALE HOLDER
DISPOSITIF DE MONTAGE ET PROCEDE D'INTRODUCTION D'UNE BANDE DANS UNE RAINURE D'UN SUPPORT DE REGLE GRADUEE

(43) Veröffentlichungstag der Anmeldung: 03.01.2018
(73) Patentinhaber: Dr. Johannes Heidenhain GmbH, 83301 Traunreut (DE)
(72) Erfinder: NUTZINGER, Tarek, 83377 Vachendorf (DE)

(56) Entgegenhaltungen:
- EP-A1- 1 731 878
- EP-A1- 2 325 610
- EP-A2- 1 041 363
- EP-B1- 0 040 684
- US-A- 5 937 532

## Beschreibung

### BEZEICHNUNG DER ERFINDUNG

Montagevorrichtung und Verfahren zum Einziehen eines Bandes in eine Nut eines Maßstabträgers

### GEBIET DER TECHNIK

Die vorliegende Erfindung betrifft eine Montagevorrichtung zum Einziehen eines Bandes in eine Nut eines Maßstabträgers gemäß den Merkmalen des Anspruchs 1 sowie ein Verfahren zum Einziehen eines Bandes in eine Nut eines Maßstabträgers gemäß den Merkmalen des Anspruchs 12.

### STAND DER TECHNIK

Die EP 0 040 684 B1 beschreibt anhand der dortigen Figur 3 eine Längenmesseinrichtung, bestehend aus einem Maßstabträger in Form eines Hohlprofils und einer relativ zum Hohlprofil verfahrbaren Abtasteinheit. Im Innenraum des Hohlprofils sind in Längsrichtung des Hohlprofils verlaufende Nuten eingebracht. Eine dieser Nuten dient zur Aufnahme eines Maßbandes und weitere Nuten dienen zur Aufnahme von Führungsbändern, an denen die Abtasteinheit längsgeführt wird. Sowohl das Maßband als auch die Führungsbänder sind als biegbare Stahlbänder ausgeführt und müssen in die jeweilige Nut von einem Ende des Hohlprofils her eingeschoben bzw. eingezogen werden.

Dieses Einschieben ist besonders bei langen Bändern problematisch, da aufgrund der aufzuwendenden Schiebekraft die Bänder ausknicken können. Ein einmal ausgeknicktes Maßband bzw. ein ausgeknicktes Führungsband führt an der Knickstelle zu Fehlern bei der Positionsmessung.

### ZUSAMMENFASSUNG DER ERFINDUNG

Der vorliegenden Erfindung liegt die Aufgabe zugrunde, eine Montagevorrichtung und ein Verfahren zum Einziehen eines Bandes in eine Nut eines Maßstabträgers anzugeben, mit der bzw. mit dem ein Maßband oder ein Führungsband einfach eingezogen werden kann, und die Bänder bei der Positionsmessung möglichst keine Messfehler verursachen.

Diese Aufgabe wird erfindungsgemäß durch die Montagevorrichtung mit den Merkmalen des Anspruchs 1 gelöst.

Ein Verfahren zum Einziehen eines Bandes mit der erfindungsgemäß ausgebildeten Montagevorrichtung ist im Anspruch 12 angegeben.

Bei allen Ausführungsformen der Erfindung kann die Montagevorrichtung definiert am Maßstabträger längsgeführt werden. Bei dieser definierten Längsführung kann der Mitnehmer der Montagevorrichtung aufgrund des Federmittels zwei Stellungen einnehmen.

In der ersten Stellung gleitet der Mitnehmer mit der durch das Federmittel vorgegebenen Druckkraft auf dem Band, wobei diese Druckkraft derart eingestellt ist, dass die Oberfläche des Bandes nicht beschädigt wird. Durch das Federmittel wird der Mitnehmer in einer Richtung senkrecht zur Oberfläche des Bandes nachgiebig an dieses gedrängt.

Bei der zweiten Stellung rastet der Mitnehmer durch Entspannen des Federmittels in die Ausnehmung des Bandes. Die erfindungsgemäß ausgebildete Montagevorrichtung ermöglicht es somit ein Band auch in eine innenliegende Nut eines hohlförmigen Maßstabträgers über eine große Länge einzuziehen. Dabei muss dem Benutzer die genaue Position der Ausnehmung in dem Band nicht bekannt sein, da die Montagevorrichtung derart ausgestaltet ist, dass sie den Mitnehmer bei der geführten Längsbewegung am Maßstabträger von der ersten Stellung selbständig in die zweite Stellung (Einhaken) verlagert.

Eine zusätzliche besonders vorteilhafte Ausgestaltung der Montagevorrichtung - bei der nachfolgenden Beschreibung von Ausführungsbeispielen erste Montagevorrichtung genannt - ermöglicht darüber hinaus zusätzlich eine selbständige Verlagerung des Mitnehmers bei der geführten Längsbewegung am Maßstabträger von der zweiten Stellung zurück in die erste Stellung (Aushaken).

Vorteilhafte Ausführungen der Erfindung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: einen Querschnitt einer Längenmesseinrichtung mit einem Maßband und mehreren Führungsbändern;
- Figur 2: eine perspektivische Ansicht der Längenmesseinrichtung beim Einschieben eines der Führungsbänder mit der erfindungsgemäß ausgebildeten Montagevorrichtung nach dem ersten Ausführungsbeispiel;
- Figur 3: einen Längsschnitt mit eingesetzter Montagevorrichtung in einer ersten Position zum Einziehen des Führungsbandes;
- Figur 4: den Längsschnitt gemäß der Figur 3 um die Längsachse gekippt;
- Figur 5: einen Längsschnitt mit eingesetzter Montagevorrichtung in einer zweiten Position zum Einziehen des Führungsbandes;
- Figur 6: einen Längsschnitt mit eingesetzter Montagevorrichtung in einer dritten Position beim Einziehen des Führungsbandes;
- Figur 7: einen Längsschnitt mit eingesetzter Montagevorrichtung in einer vierten Position nach dem Einziehen des Führungsbandes;
- Figur 8: die erfindungsgemäße Montagevorrichtung nach dem ersten Ausführungsbeispiel im Detail;
- Figur 9: eine Ansicht der Längenmesseinrichtung beim Einziehen eines Maßbandes mit der erfindungsgemäß ausgebildeten Montagevorrichtung nach dem zweiten Ausführungsbeispiel;
- Figur 10: einen Längsschnitt beim Einziehen des Maßbandes mit der Montagevorrichtung nach Figur 9, und
- Figur 11: die Montagevorrichtung nach dem zweiten Ausführungsbeispiel in perspektivischer Ansicht.

### BESCHREIBUNG DER AUSFÜHRUNGSFORMEN

Die Erfindung wird anhand zweier Ausführungsbeispiele erläutert. Bei dem ersten Ausführungsbeispiel wird die erfindungsgemäße Montagevorrichtung erste Montagevorrichtung genannt und bei dem zweiten Ausführungsbeispiel zweite Montagevorrichtung.

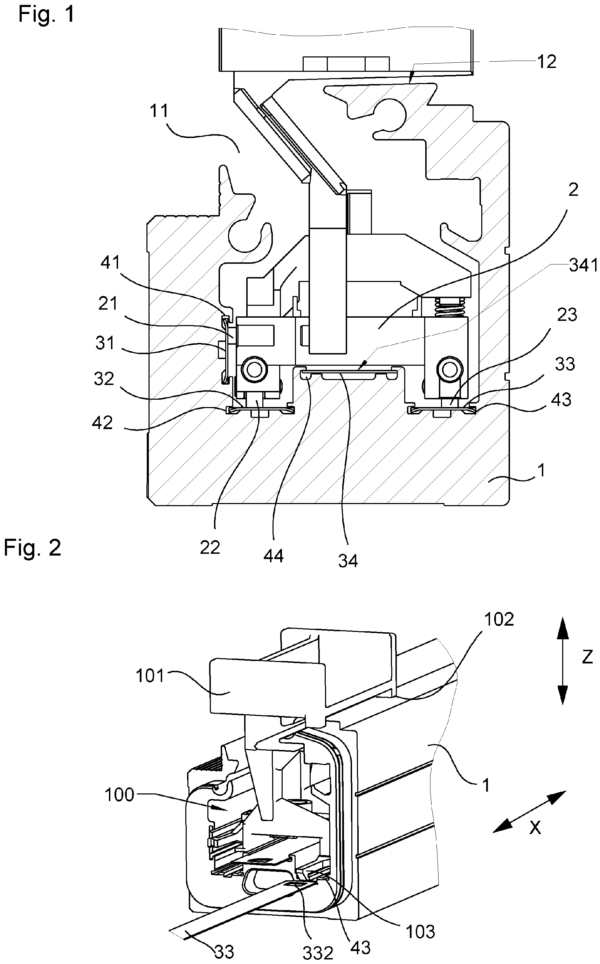

Anhand der Figur 1 wird der Aufbau einer Längenmesseinrichtung erläutert, bei der die Erfindung vorteilhaft eingesetzt wird. Ein Maßstabträger 1 in Form eines Hohlprofils weist einen durch nicht dargestellte dachförmig angeordneter Dichtlippen abgedichteten Längsschlitz 11 auf. Bei der Positionsmessung ist im Inneren des Hohlprofils eine Abtasteinheit 2 angeordnet, die über einen durch die Dichtlippen hindurchgeführten Mitnehmer mit einem zu messenden Objekt befestigt ist. Zur Positionsmessung wird der Mitnehmer der Abtasteinheit 2 an ein erstes zu messende Objekt angebaut und der Maßstabträger 1 an ein in Längsrichtung X dazu bewegliches zweites zu messende Objekt angebaut. Die Abtasteinheit 2 wird an inneren Führungsflächen des als Hohlprofil ausgebildeten Maßstabträgers 1 geführt. Diese Führungsflächen sind der Abtasteinheit 2 zugewandte Oberflächen von Führungsbändern 31, 32, 33. Zur Führung der Abtasteinheit 2 am Maßstabträger 1 in Längsrichtung X sind an dieser Führungselemente 21, 22, 23 vorgesehen, mit denen sich die Abtasteinheit 2 an den Führungsflächen der Führungsbänder 31, 32, 33 abstützt. Im dargestellten Beispiel sind die Führungselemente 21, 22, 23 Kugellager, die mit ihrer Außenfläche auf den Führungsbändern 31, 32, 33 abrollen. Die Führungsbänder 31, 32, 33 sind beispielsweise Stahlbänder.

Jedes der Führungsbänder 31, 32, 33 ist in einer Nut 41, 42, 43 des Maßstabträgers 1 eingeschoben, wobei jede der Nuten 41, 42, 43 das jeweilige Führungsband 31, 32, 33 an den beiden Seitenrändern formschlüssig umgreift, so dass das jeweilige Führungsband 31, 32, 33 nur von dem offenen Ende der Nut 41, 42, 43 her eingeschoben werden kann.

Eine weitere Nut 44 des Maßstabträgers 1 ist zur Aufnahme eines Maßbandes 34 vorgesehen. Das Maßband 34 trägt auf seiner Oberseite, also zur Abtasteinheit 2 weisend und dieser gegenüberliegend, eine Messteilung 341 auf, die im Messbetrieb von der Abtasteinheit 2 abgetastet wird, vorzugsweise lichtelektrisch. Das Maßband 34 ist beispielsweise auch ein Stahlband. Die Nut 44 ist derart ausgestaltet, dass sie das Maßband 34 an beiden Seitenrändern formschlüssig umgreift, so dass das Maßband 34 nur von einer der beiden offenen Enden der Nut 44 her eingeschoben werden kann.

Die Abtasteinheit 2 ist im Messbetrieb im Inneren des als Hohlprofil ausgebildeten Maßstabträgers 1 geschützt untergebracht. Die Nuten 41 bis 44 sind an Innenflächen des Hohlprofils vorgesehen.

Für große Messlängen besteht die Längenmesseinrichtung aus mehreren in Längsrichtung X aneinander gereihten Maßstabträgern 1. Nach der Montage der mehreren Maßstabträger 1 an dem zu messenden Objekt werden die Führungsbänder 31, 32, 33 sowie das Maßband 34 in die dafür vorgesehenen Nuten 41, 42, 43, 44 eingeschoben bzw. eingezogen. Die zwischen jeweils zwei Maßstabträgern 1 bei der Aneinanderreihung entstehende Stoßstelle wird von den Bändern 41 bis 44 überbrückt, so dass sich einerseits in Längsrichtung X durchgehende Führungsflächen sowie andererseits eine über die gesamte Messlänge ungestörte Messteilung 341 ergibt.

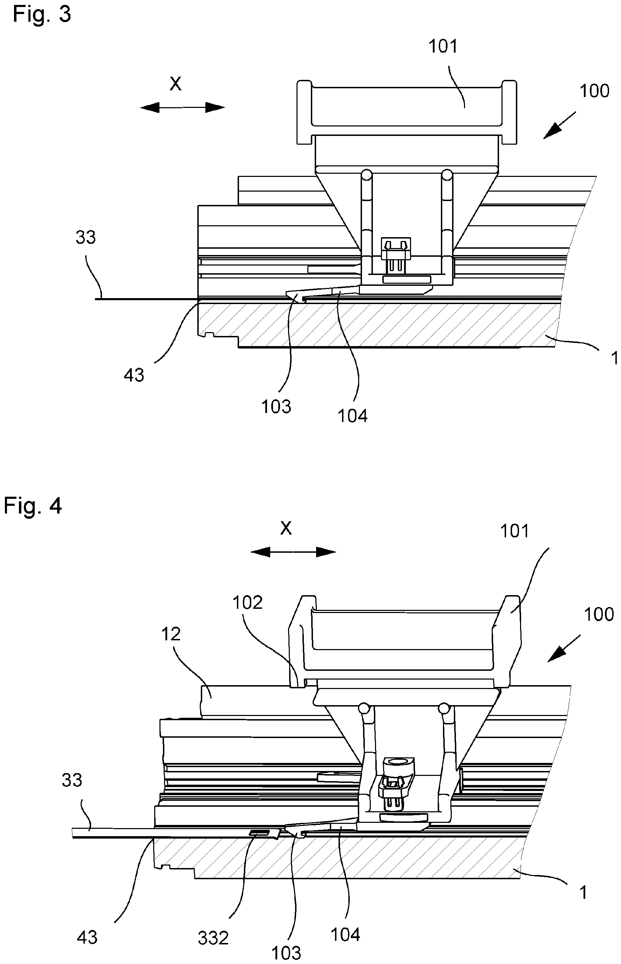

Das erste Ausführungsbeispiel der Erfindung wird nachfolgend anhand der Figuren 2 bis 8 weiter erläutert. Diese erste Montagevorrichtung 100 zum Einziehen zumindest eines der Bänder Maßband 34 oder Führungsband 31, 32, 33 in eine in Längsrichtung X des Maßstabträgers 1 verlaufende Nut 41, 42, 43, 44 umfasst einen Grundkörper 101 mit einer Führung 102 zum Längsführen der Montagevorrichtung 100 am Maßstabträger 1. Die Montagevorrichtung 100 wird durch das Zusammenwirken der Führung 102 des Grundkörpers 101 und einer Führungsfläche 12 des Maßstabträgers 1 in einem vorgegebenen Abstand zur Oberfläche des einzuziehenden Band 31, 32, 33, 34 gehalten, im Beispiel ist dieser Abstand in Z-Richtung. Im ersten Ausführungsbeispiel wird die Montagevorrichtung 100 dazu genutzt, das Führungsband 33 in die Nut 43 einzuziehen, wie nachfolgend weiter erläutert wird. Da in gleicher Weise auch das Maßband 34 in die Nut 44 eingezogen werden kann, wird nachfolgend nur noch der Begriff Band verwendet.

Die Montagevorrichtung 100 umfasst einen Mitnehmer 103 zum Einhaken in eine Ausnehmung 332 des Bandes 33 und zum Mitnehmen des Bandes 33 in Längsrichtung X im eingehakten Zustand.

Weiterhin umfasst die Montagevorrichtung 100 ein Federmittel 104, das dazu ausgebildet ist, den Mitnehmer 103 derart am Grundkörper 101 zu halten, dass der Mitnehmer 103 beim Längsführen der Montagevorrichtung 100 am Maßstabträger 1 in Positionen entlang des Bandes 33 außerhalb der Ausnehmung 332 mit einer Druckkraft F vorgespannt auf einer Oberfläche des Bandes 33 gleitet. An der Position der Ausnehmung 332 rastet der Mitnehmer 103 in die Ausnehmung 332 ein, so dass das Band 33 beim weiteren Längsführen vom Mitnehmer 103 mitgenommen wird. Durch die Lage der am Grundkörper 101 vorgesehenen Führung 102 und dem Abstand dieser Führung zum Mitnehmer 103 ist der Federweg und in Verbindung mit der Ausgestaltung (Federkonstante) des Federmittels 104 die Druckkraft F, die aufgrund des Federmittels 104 vor dem Einhaken in die Ausnehmung 332 auf das Band 33 wirkt, definiert vorgegeben.

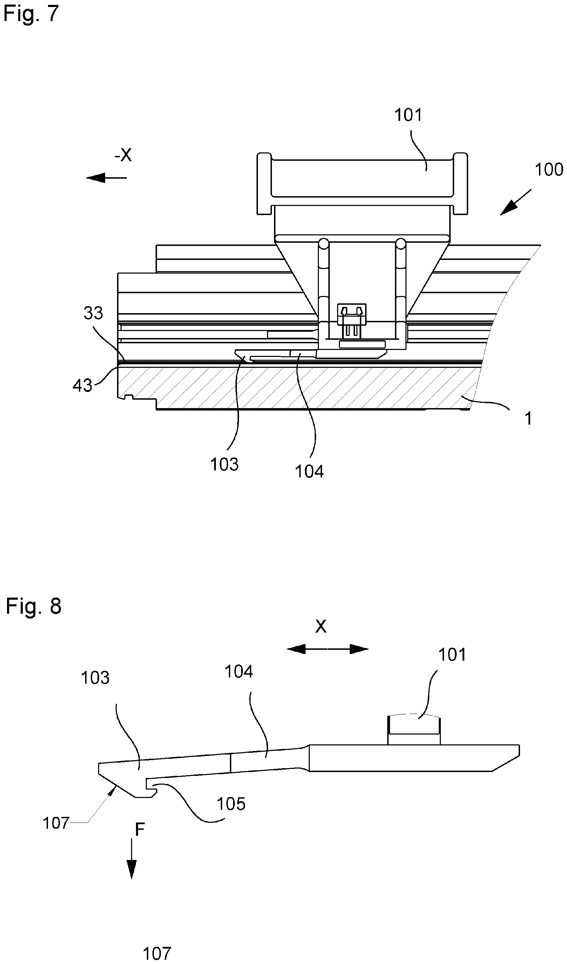

In der Figur 8 ist ein Ausschnitt der Montagevorrichtung 100 dargestellt. Dargestellt ist ein Teil des Grundkörpers 101, das Federmittel 104 und der Mitnehmer 103. Das Federmittel 104 ist in diesem Beispiel eine zwischen dem Grundkörper 101 und dem Mitnehmer 103 angeordnete Biegefeder, die den Mitnehmer 103 senkrecht zur Oberfläche des Bandes 33 - hier in Z-Richtung - auslenkbar am Grundkörper 101 hält.

Zurformschlüssigen Fixierung des Bandes 33 am Mitnehmer 103 weist dieser einen in Längsrichtung X verlaufenden Einschnitt 105 auf. Im eingehakten Zustand ist das Band 33 im Einschnitt 105 in Z-Richtung formschlüssig daran fixiert.

In besonders vorteilhafter Weise ist der Mitnehmer 103 auf einer Seite - bezogen auf die Längsrichtung X - ausgebildet zum Mitnehmen des Bandes 33 im eingehakten Zustand. Auf der gegenüberliegenden Seite ist der Mitnehmer 103 ausgebildet zum automatischen Aushaken des Mitnehmers 103 aus der Ausnehmung 332. Zum automatischen Aushaken weist der Mitnehmer 103 eine zur Längsrichtung X geneigte Fläche 107 auf, die derart ausgebildet ist, dass im eingehakten Zustand bei einer Längsverschiebung der Montagevorrichtung 100 relativ zum Band 33 in Richtung der geneigten Fläche 107 die geneigte Fläche 107 mit einer die Ausnehmung 332 begrenzenden Kante des Bandes 33 in Kontakt tritt. Bei weiterer Längsverschiebung der Montagevorrichtung 100 wird auf den Mitnehmer 103 eine Querbewegung entgegen der Druckkraft F eingeleitet, die den Mitnehmer 103 aus der Ausnehmung 332 aushakt. Nach erfolgtem Einziehen des Bandes 33 in die Nut 43 kann somit die Montagevorrichtung 100 wieder zum Ende des Maßstabträgers 1 zurückgeschoben werden und dort entnommen werden, wobei das eingezogene Band 33 in der Nut 43 verbleibt.

Die geneigte Fläche 107 hat auch Vorteile beim Einhaken, da der Mitnehmer 103 am Bandanfang durch die geneigte Fläche 107 langsam hochgehoben wird, bis er vollständig auf dem Band 33 zu liegen kommt und darauf gleitet.

Zur weiteren Verdeutlichung der Erfindung wird der Ablauf des Einziehens des Bandes 33 erläutert. Die Figuren 2 bis 4 zeigen einen ersten Zustand beim Einziehen des Bandes 33. Die Montagevorrichtung 100 kooperiert dabei bereits mit dem Maßstabträger 1, so dass der Mitnehmer 103 vorgespannt in der Nut 43 positioniert ist. Das Band 33 kann nun von der endseitigen Öffnung der Nut 43 her eingeschoben werden.

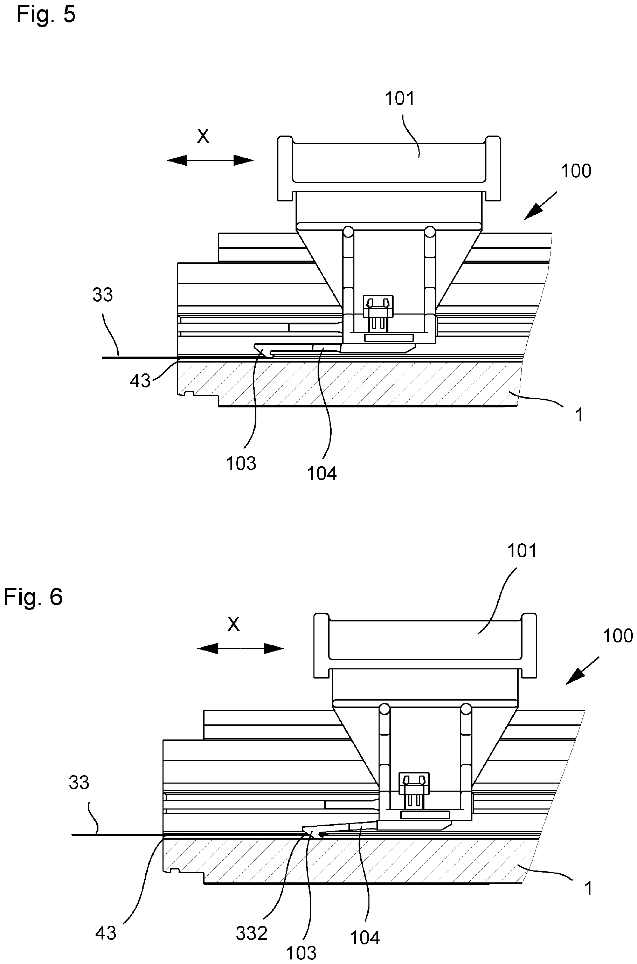

Dabei wird das Band 33 unter den Mitnehmer 103 geschoben, wobei durch die Schiebekraft der Mitnehmer 103 auf der Oberfläche des Bandes 33 zu liegen kommt. Diese Position des Mitnehmers 103 zwischen dem Bandanfang und der Ausnehmung 332 ist in Figur 5 dargestellt. Dabei drückt der Mitnehmer 103 mit der Druckkraft F auf das Band 33.

Erfolgt nun eine weitere Längsverschiebung zwischen Band 33 und Montagevorrichtung 100, gleitet der Mitnehmer 103 durch das Federmittel vorgespannt weiter auf der Oberfläche des Bandes 33 und rastet beim Erreichen der Ausnehmung 332 des Bandes 33 in diese Ausnehmung 332 ein. Dieser Zustand ist in Figur 6 dargestellt

Beim weiteren Längsführen der Montagevorrichtung 100 am Maßstabträger 1 wird das Band 33 vom Mitnehmer 103 mitgenommen und das Band 33 dabei in die Nut 43 eingezogen.

Durch die besonders vorteilhafte Ausgestaltung der Montagevorrichtung 100 kann diese durch einfaches Zurückschieben vom Maßstabträger 1 entfernt werden. Das Aushaken aus der Ausnehmung 332 des Bandes 33 erfolgt durch Längsführen der Montagevorrichtung 100 in die zum Einziehen entgegengesetzte Richtung -X. Dabei tritt die zur Längsrichtung X geneigte Fläche 107 mit der die Ausnehmung 332 begrenzenden Kante des Bandes 33 in Kontakt. Dabei wird auf den Mitnehmer 103 eine Querbewegung (Z-Richtung) eingeleitet, die den Mitnehmer 103 gegen die Druckkraft F aus der Ausnehmung 332 aushakt und beim weiteren Längsführen der Montagevorrichtung 100 gleitet der Mitnehmer 103 durch das Federmittel 104 vorgespannt auf der Oberfläche des Bandes 33. Dieser Zustand ist in Figur 7 dargestellt. Die Montagevorrichtung 100 kann dann entgegen der Einzieh-Bewegungsrichtung aus dem Ende des Hohlprofils entnommen werden, an dem der Einziehvorgang begonnen hat.

Die Erfindung umfasst auch einen Teilesatz, mit
dem Maßstabträger 1 mit zumindest einer in Längsrichtung X des Maßstabträgers 1 verlaufenden Nut 41, 42, 43, 44, die eine endseitige Öffnung zum Einschieben eines Bandes 31, 32, 33, 34 aufweist;
dem Band 31, 32, 33, 34 mit zumindest einer Ausnehmung 332, 342 und der vorstehend erläuterten Montagevorrichtung 100 zum Einziehen des Bandes 31, 32, 33, 34 in die zugehörige Nut 41, 42, 43, 44.

Ist das einzuziehende Band 31, 32, 33 ein Führungsband, umfasst der Teilesatz vorzugsweise zusätzlich die Abtasteinheit 2, welche zumindest ein Führungselement 21, 22, 23 aufweist, mit dem die Abtasteinheit 2 auf zumindest einem Band 31, 33, 34 in Längsrichtung X geführt bewegbar ist, wenn das Band 31, 33, 34 in die Nut 41, 42, 43 des Maßstabträgers 1 eingezogen ist.

Ist das einzuziehende Band 34 ein Maßband mit einer optisch abtastbaren Messteilung 341, umfasst der Teilesatz optional zusätzlich zum Maßstabträger 1, dem Band 34 und der vorstehend erläuterten Montagevorrichtung 100 die Abtasteinheit 2, die dazu ausgebildet ist die Messteilung 341 lichtelektrisch abzutasten, wenn das Band 34 in die Nut 44 eingezogen ist.

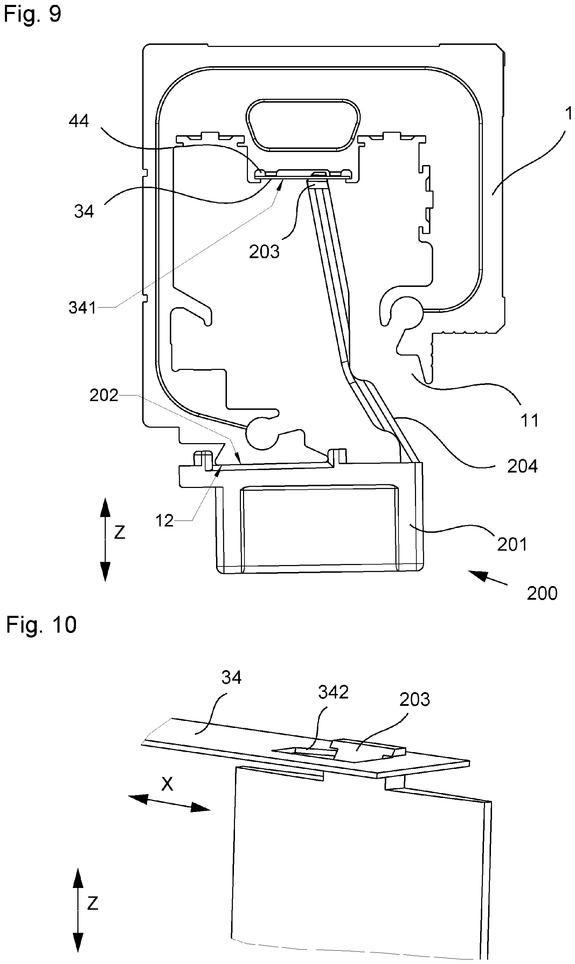

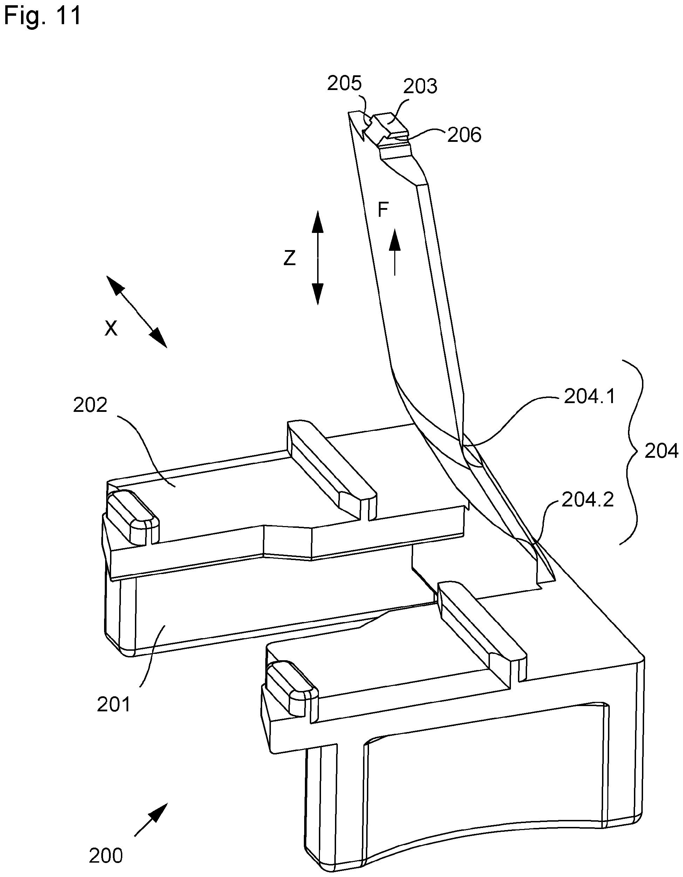

Nachfolgend wird anhand der Figuren 9 bis 11 das zweite Ausführungsbeispiel, also die zweite erfindungsgemäße Montagevorrichtung 200, näher erläutert.

Diese zweite Montagevorrichtung 200 zum Einziehen eines Bandes 34 in eine in Längsrichtung X eines Maßstabträgers 1 verlaufende Nut 44 umfasst wiederum einen Grundkörper 201 mit einer Führung 202 zum Längsführen der Montagevorrichtung 200 am Maßstabträger 1. Die Montagevorrichtung 200 wird hier dazu benutzt ein Band 44 einzuziehen, das als Maßband fungiert und auf seiner Oberfläche eine lichtelektrisch abtastbare Messteilung 341 aufweist.

Die Montagevorrichtung 200 umfasst weiterhin einen Mitnehmer 203 zum Einhaken in eine Ausnehmung 342 des Bandes 34 und zum Mitnehmen des Bandes 342 im eingehakten Zustand. Darüber hinaus enthält die Montagevorrichtung 200 ein Federmittel 204, das dazu ausgebildet ist, den Mitnehmer 203 derart am Grundkörper 201 zu halten, dass der Mitnehmer 203 beim Längsführen der Montagevorrichtung 200 am Maßstabträger 1 in Positionen entlang des Bandes 34 außerhalb der Ausnehmung 342 vorgespannt auf einer Oberfläche des Bandes 34 gleitet und an der Position der Ausnehmung 342 in diese einrastet, so dass das Band 34 beim weiteren Längsführen vom Mitnehmer 203 mitgenommen wird. Die Federkraft F des Federmittels 204 sowie das Material des Mitnehmers 203 ist derart gewählt, dass die Oberfläche des Bandes 34 nicht beschädigt wird. Als Material für den das Band 34 berührenden Bereich beim Gleitvorgang eignet sich besonders Kunststoff.

Im konkreten Ausführungsbeispiel ist das Federmittel 204 von einem zwischen dem Grundkörper 201 und dem Mitnehmer 203 angeordneten Verbindungselement gebildet, das mehrere voneinander beabstandete Festkörpergelenke 204.1, 204.2 aufweist. Über die Festkörpergelenke 204.1, 204.2 wird der Mitnehmer 203 nachgiebig federnd am Grundkörper 201 gehalten, und zwar in einer Richtung senkrecht zur Oberfläche des Bandes 34 (hier in Z-Richtung).

In diesem Ausführungsbeispiel weist der Mitnehmer 203 an zwei in Längsrichtung X einander gegenüberliegenden Seiten einen in Längsrichtung X verlaufenden Einschnitt 205, 206 zurformschlüssigen Fixierung des Bandes 34 senkrecht zur Längsrichtung X - also zur formschlüssigen Fixierung in Z-Richtung - auf.

Auch bei diesem Ausführungsbeispiel umfasst die Erfindung auch einen Teilesatz mit
dem Maßstabträger 1 mit zumindest einer in Längsrichtung X des Maßstabträgers X verlaufenden Nut 44, die eine endseitige Öffnung zum Einschieben des Bandes 34 aufweist;
das Band 34 selbst mit zumindest einer Ausnehmung 342 und
die vorher erläuterte Montagevorrichtung 200 zum Einziehen des Bandes 34 in die Nut.

Ist das Band 34 ein Maßband mit einer optisch abtastbaren Messteilung 341, dann umfasst der Teilesatz vorzugsweise zusätzlich eine Abtasteinheit 2, die dazu ausgebildet ist die Messteilung 341 abzutasten, wenn das Band 34 in die Nut 44 des Maßstabträgers 1 eingezogen ist.

Wie beim ersten Ausführungsbeispiel, so ist die Erfindung besonders vorteilhaft einsetzbar, wenn der Maßstabträger 1 ein Hohlprofil ist und die Nut 34 an einer Innenfläche des Hohlprofils eingebracht ist. Dabei weist das Hohlprofil eine äußere Führungsfläche 12 zum Längsführen des Grundkörpers 201 der Montagevorrichtung 200 am Hohlprofil auf.

Auch mit dieser zweiten Montagevorrichtung 200 ist ein Einziehen des Bandes 34 in die in Längsrichtung X eines Maßstabträgers 1 verlaufende Nut 44 mit folgenden Verfahrensschritten möglich:
- Einschieben des Bandes 34 in die Nut 44, ausgehend von einer endseitigen Öffnung der Nut 44;
- Längsführen der Montagevorrichtung 200 relativ zum Band 34, wobei der Mitnehmer 203 der Montagevorrichtung 200 dabei durch das Federmittel 204 vorgespannt auf einer Oberfläche des Bandes 34 gleitet und beim Erreichen der Ausnehmung 342 des Bandes 34 der Mitnehmer 203 in diese Ausnehmung 342 einrastet;
- Mitnahme des Bandes 34 vom Mitnehmer 203 beim weiteren Längsführen der Montagevorrichtung 200 am Maßstabträger 1 und Einziehen des Bandes 34 dabei in die Nut 44;
- Aushaken des Mitnehmers 203 aus der Ausnehmung 342 des Bandes 34 und
- Entfernen der Montagevorrichtung 200 vom Maßstabträger 1.

Im Unterschied zum ersten Ausführungsbeispiel muss diese zweite Montagevorrichtung 200 nicht zwingend von der endseitigen Öffnung des als Hohlprofil ausgestalteten Maßstabträgers 1 her eingeführt werden.

Die zweite Montagevorrichtung 200 hat nämlich den besonderen Vorteil, dass sie derart ausgebildet ist, dass der Mitnehmer 203 zum Einziehen des Bandes 34 durch den Längsschlitz 11 und somit an beliebiger Längsposition in das Hohlprofil in einer Richtung quer zur Längsrichtung X (im Beispiel in Z-Richtung) eingeführt werden kann.

Da die Verbindung vom Grundkörper 201 bis zum Mitnehmer 203 derart schlank ausgebildet ist, dass diese durch den Längsschlitz hindurchgeführt werden kann, erfolgt das Aushaken in diesem zweiten Ausführungsbeispiel durch Bewegen der gesamten Montagevorrichtung 200 in Z-Richtung, wodurch auch der Mitnehmer 203 aus der Ausnehmung 342 bewegt wird und dadurch die Montagevorrichtung 200 vom Maßstabträger 1 entfernt wird.

## Patentansprüche

1. Montagevorrichtung zum Einziehen eines Bandes (33, 34) in eine in Längsrichtung (X) eines Maßstabträgers (1) verlaufende Nut (43, 44), umfassend
- einen Grundkörper (101, 201) mit einer Führung (102, 202) zum Längsführen der Montagevorrichtung (100, 200) am Maßstabträger (1);
- einen Mitnehmer (103, 203) zum Einhaken in eine Ausnehmung (332, 342) des Bandes (33, 34) und zum Mitnehmen des Bandes (33, 34) im eingehakten Zustand;
- ein Federmittel (104, 204), das dazu ausgebildet ist, den Mitnehmer (103, 203) derart am Grundkörper (101, 201) zu halten, dass der Mitnehmer (103, 203) beim Längsführen der Montagevorrichtung (100, 200) relativ zum Band (33, 34) in Positionen außerhalb der Ausnehmung (332, 342) in Richtung (Z) der Oberfläche des Bandes (33, 34) vorgespannt ist und an der Position der Ausnehmung (332, 342) in diese einrastet, so dass das Band (33, 34) beim weiteren Längsführen der Montagevorrichtung (100, 200) vom Mitnehmer (103, 203) mitgenommen wird.

2. Montagevorrichtung nach Anspruch 1, wobei das Federmittel (104, 204) eine zwischen dem Grundkörper (101, 201) und dem Mitnehmer (103, 203) angeordnete Biegefeder ist.

3. Montagevorrichtung nach einem der vorhergehenden Ansprüche, wobei das Federmittel (204) von einem zwischen dem Grundkörper (201) und dem Mitnehmer (203) angeordneten Verbindungselement gebildet ist, das mehrere voneinander beabstandete Festkörpergelenke (204.1, 204.2) aufweist.

4. Montagevorrichtung nach einem der vorhergehenden Ansprüche, wobei der Mitnehmer (103, 203) einen in Längsrichtung (X) verlaufenden Einschnitt (105, 205, 206) zur formschlüssigen Fixierung des Bandes (33, 34) am Mitnehmer (103, 203) senkrecht zur Längsrichtung (X) aufweist.

5. Montagevorrichtung nach einem der vorhergehenden Ansprüche, wobei der Mitnehmer (203) an zwei einander gegenüberliegenden Seiten einen in Längsrichtung (X) verlaufenden Einschnitt (205, 206) zur formschlüssigen Fixierung des Bandes (34) senkrecht zur Längsrichtung (X) aufweist.

6. Montagevorrichtung nach einem der vorhergehenden Ansprüche 1 bis 4, wobei der Mitnehmer (103) auf einer Seite ausgebildet ist zum Mitnehmen des Bandes (33) im eingehakten Zustand und der Mitnehmer (103) auf der gegenüberliegenden Seite eine zur Längsrichtung (X) geneigte Fläche (107) aufweist, die derart ausgebildet ist, dass im eingehakten Zustand bei einer Längsverschiebung der Montagevorrichtung (100) relativ zum Band (33) in Richtung der geneigten Fläche (107) die geneigte Fläche (107) mit einer die Ausnehmung (332) begrenzenden Kante des Bandes (33) in Kontakt tritt und bei weiterer Längsverschiebung der Montagevorrichtung (100) auf den Mitnehmer (103) eine Querbewegung eingeleitet wird, die den Mitnehmer (103) aus der Ausnehmung (332) aushakt.

7. Teilesatz, umfassend
- einen Maßstabträger (1) mit zumindest einer in Längsrichtung (X) des Maßstabträgers (1) verlaufenden Nut (43, 44), die eine endseitige Öffnung zum Einschieben eines Bandes (33, 34) aufweist;
- das Band (33, 34) mit zumindest einer Ausnehmung (332, 342) und
- die Montagevorrichtung (100, 200) nach einem der vorhergehenden Ansprüche zum Einziehen des Bandes (33, 34) in die Nut (43, 44).

8. Teilesatz nach Anspruch 7, wobei der Maßstabträger (1) ein Hohlprofil ist und die Nut (43, 44) an einer Innenfläche des Hohlprofils eingebracht ist und das Hohlprofil eine äußere Führungsfläche (12) zum Längsführen des Grundkörpers (101, 201) der Montagevorrichtung (100, 200) am Hohlprofil aufweist.

9. Teilesatz nach Anspruch 8, wobei das Hohlprofil einen durch Dichtlippen abgedichteten Längsschlitz (11) aufweist und die Montagevorrichtung (200) derart ausgebildet ist, dass der Mitnehmer (203) zum Einziehen des Bandes (34) durch diesen Längsschlitz (11) in das Hohlprofil in einer Richtung quer zur Längsrichtung (X) eingeführt werden kann.

10. Teilesatz nach einem der vorhergehenden Ansprüche 7 bis 9, wobei das Band (34) ein Maßband mit einer optisch abtastbaren Messteilung (341) ist und der Teilesatz weiter eine Abtasteinheit (2) umfasst, die dazu ausgebildet ist die Messteilung (341) abzutasten, wenn das Maßband in die Nut (44) des Maßstabträgers (1) eingezogen ist.

11. Teilesatz nach einem der vorhergehenden Ansprüche 7 bis 9, wobei das Band (33) ein Führungsband ist und der Teilesatz weiter eine Abtasteinheit (2) umfasst, die zumindest ein Führungselement (23) aufweist, mit dem die Abtasteinheit (2) auf dem Führungsband in Längsrichtung (X) geführt bewegbar ist, wenn das Führungsband in die Nut (43) des Maßstabträgers (1) eingezogen ist.

12. Verfahren zum Einziehen eines Bandes (33, 34) in eine in Längsrichtung (X) eines Maßstabträgers (1) verlaufende Nut (43, 44) unter Verwendung der Montagevorrichtung (100, 200) nach einem der vorhergehenden Ansprüche 1 bis 6, mit folgenden Verfahrensschritten
- Einschieben des Bandes (33, 34) in die Nut (43, 44), ausgehend von einer endseitigen Öffnung der Nut (43, 44);
- in Kontakt bringen der Führung (102, 202) des Grundkörpers (101, 201) der Montagevorrichtung (100, 200) mit einer Führungsfläche (12) des Maßstabträgers (1) und Längsführen der Montagevorrichtung (100, 200) relativ zum Band (33, 34), wobei der Mitnehmer (103, 203) der Montagevorrichtung (100, 200) dabei durch das Federmittel (104, 204) vorgespannt auf einer Oberfläche des Bandes (33, 34) gleitet und beim Erreichen einer Ausnehmung (332, 342) des Bandes (33, 34) in die Ausnehmung (332, 342) einrastet;
- Mitnahme des Bandes (33, 34) vom Mitnehmer (103, 203) beim Längsführen der Montagevorrichtung (100, 200) am Maßstabträger (1) und Einziehen des Bandes (33, 34) dabei in die Nut (43, 44);
- Aushaken des Mitnehmers (103, 203) aus der Ausnehmung (332, 342) des Bandes (33, 34) und
- Entfernen der Montagevorrichtung (100, 200) vom Maßstabträger (1).

13. Verfahren nach Anspruch 12, wobei die Montagevorrichtung (100) nach Anspruch 6 ausgebildet ist und wobei das Aushaken des Mitnehmers (103, 203) aus der Ausnehmung (332) des Bandes (33) durch Längsführen der Montagevorrichtung (100) in die zum Einziehen entgegengesetzte Richtung (-X) erfolgt und dabei die zur Längsrichtung (X) geneigte Fläche (107) mit der die Ausnehmung (332) begrenzenden Kante des Bandes (33) in Kontakt tritt und auf den Mitnehmer (103) eine Querbewegung eingeleitet wird, die den Mitnehmer (103) aus der Ausnehmung (332) aushakt und beim weiteren Längsführen der Montagevorrichtung (100) der Mitnehmer (103) durch das Federmittel (104) vorgespannt auf der Oberfläche des Bandes (33) gleitet.

14. Verfahren nach Anspruch 12, wobei der Maßstabträger (1) ein Hohlprofil ist, das einen durch Dichtlippen abgedichteten Längsschlitz (11) aufweist und der Mitnehmer (203) der Montagevorrichtung (200) zum in Kontakt bringen der Führung (202) des Grundkörpers (201) mit der Führungsfläche (12) des Maßstabträgers (1) durch den Längsschlitz (11) in das Hohlprofil in einer Richtung quer zur Längsrichtung (X) in den Innenraum des Hohlprofils eingeführt wird.

## Claims

1. Mounting device for drawing a tape (33, 34) into a groove (43, 44) extending in the longitudinal direction (X) of a scale carrier (1), comprising
- a base (101, 201) having a guide (102, 202) for the longitudinal guidance of the mounting device (100, 200) on the scale carrier (1);
- a driver (103, 203) for hooking into a cut-out (332, 342) in the tape (33, 34) and for driving the tape (33, 34) in the hooked-in state;
- a spring means (104, 204), which is designed to hold the driver (103, 203) on the base (101, 201) in such a way that, during the longitudinal guidance of the mounting device (100, 200) relative to the tape (33, 34), the driver (103, 203) is preloaded in the direction (Z) of the surface of the tape (33, 34) in positions outside the cut-out (332, 342) and, at the position of the cut-out (332, 342), latches into the latter, so that during the further longitudinal guidance of the mounting device (100, 200), the tape (33, 34) is carried along by the driver (103, 203).

2. Mounting device according to Claim 1, wherein the spring means (104, 204) is a bending spring arranged between the base (101, 201) and the driver (103, 203) .

3. Mounting device according to one of the preceding claims, wherein the spring means (204) is formed by a connecting element which is arranged between the base (201) and the driver (203) and which has a plurality of solid body joints (204.1, 204.2) spaced apart from each other.

4. Mounting device according to one of the preceding claims, wherein the driver (103, 203) has a cut (105, 205, 206) extending in the longitudinal direction (X) for the form-fitting fixing of the tape (33, 34) to the driver (103, 203) at right angles to the longitudinal direction (X).

5. Mounting device according to one of the preceding claims, wherein the driver (203) has a cut (205, 206) extending in the longitudinal direction (X) on two mutually opposite sides for the form-fitting fixing of the tape (34) at right angles to the longitudinal direction (X).

6. Mounting device according to one of the preceding Claims 1 to 4, wherein the driver (103) on one side is formed to drive the tape (33) in the hooked-in state, and the driver (103) on the opposite side has a surface (107) which is inclined with respect to the longitudinal direction (X) and which is formed in such a way that, in the hooked-in state, during a longitudinal displacement of the mounting device (100) relative to the tape (33) in the direction of the inclined surface (107), the inclined surface (107) comes into contact with an edge of the tape (33) that delimits the cut-out (332) and, during a further longitudinal displacement of the mounting device (100), a transverse movement is introduced to the driver (103), which unhooks the driver (103) from the cut-out (332).

7. Parts kit, comprising
- a scale carrier (1) having at least one groove (43, 44) which extends in the longitudinal direction (X) of the scale carrier (1) and has an opening at the end for the insertion of a tape (33, 34);
- the tape (33, 34) having at least one cut-out (332, 342) and
- the mounting device (100, 200) according to one of the preceding claims for drawing the tape (33, 34) into the groove (43, 44).

8. Parts kit according to Claim 7, wherein the scale carrier (1) is a hollow profile and the groove (43, 44) is introduced into an inner surface of the hollow profile, and the hollow profile has an outer guide surface (12) for the longitudinal guidance of the base (101, 201) of the mounting device (100, 200) on the hollow profile.

9. Parts kit according to Claim 8, wherein the hollow profile has a longitudinal slot (11) sealed off by sealing lips, and the mounting device (200) is formed in such a way that the driver (203) for drawing in the tape (34) can be introduced through this longitudinal slot (11) into the hollow profile in a direction transverse to the longitudinal direction (X).

10. Parts kit according to one of the preceding Claims 7 to 9, wherein the tape (34) is a measuring tape having an optically scannable measuring graduation (341) and the parts kit further comprises a scanning unit (2), which is designed to scan the measuring graduation (341) when the measuring tape has been drawn into the groove (44) of the scale carrier (1).

11. Parts kit according to one of the preceding Claims 7 to 9, wherein the tape (33) is a guide tape and the parts kit further comprises a scanning unit (2) which has at least one guide element (23) with which the scanning unit (2) can be moved on the guide tape while being guided in the longitudinal direction (X) when the guide tape has been drawn into the groove (43) of the scale carrier (1).

12. Method for drawing a tape (33, 34) into a groove (43, 44) extending in the longitudinal direction (X) of a scale carrier (1) by using the mounting device (100, 200) according to one of the preceding Claims 1 to 6, having the following method steps:
- inserting the tape (33, 34) into the groove (43, 44), starting from an opening at the end of the groove (43, 44);
- bringing the guide (102, 202) of the base (101, 201) of the mounting device (100, 200) into contact with a guide surface (12) of the scale carrier (1) and longitudinally guiding the mounting device (100, 200) relative to the tape (33, 34), wherein the driver (103, 203) of the mounting device (100, 200) in the process slides on a surface of the tape (33, 34) under the preload of the spring means (104, 204) and, upon reaching a cut-out (332, 342) in the tape (33, 34), latches into the cut-out (332, 342);
- driving the tape (33, 34) by the driver (103, 203) during the longitudinal guidance of the mounting device (100, 200) on the scale carrier (1) and in the process drawing the tape (33, 34) into the groove (43, 44);
- unhooking the driver (103, 203) from the cut-out (332, 342) in the tape (33, 34) and
- removing the mounting device (100, 200) from the scale carrier (1).

13. Method according to Claim 12, wherein the mounting device (100) is formed in accordance with Claim 6, and wherein the unhooking of the driver (103, 203) from the cut-out (332) of the tape (33) is carried out by longitudinally guiding the mounting device (100) in the direction (-X) opposite to that for drawing in and, in the process, the surface (107) inclined with respect to the longitudinal direction (X) comes into contact with the edge of the tape (33) that delimits the cut-out (332), and a transverse movement is introduced to the driver (103), which unhooks the driver (103) from the cut-out (332) and, during the further longitudinal guidance of the mounting device (100), the driver (103) slides on the surface of the tape (33) under the preload of the spring means (104).

14. Method according to Claim 12, wherein the scale carrier (1) is a hollow profile which has a longitudinal slot (11) sealed off by sealing lips, and the driver (203) of the mounting device (200) for bringing the guide (202) of the base (201) into contact with the guide surface (12) of the scale carrier (1) is inserted through the longitudinal slot (11) into the hollow profile into the interior of the hollow profile in a direction transverse to the longitudinal direction (X) .

## Revendications

1. Dispositif de montage pour l'introduction d'une bande (33, 34) dans une rainure (43, 44) s'étendant dans la direction longitudinale (X) d'un support de règle graduée (1), comprenant
- un corps de base (101, 201) avec un guide (102, 202) pour le guidage longitudinal du dispositif de montage (100, 200) sur le support de règle graduée (1);
- un élément d'entraînement (103, 203) à accrocher dans un creux (332, 342) de la bande (33, 34) et pour entraîner la bande (33, 34) dans l'état accroché;
- un moyen de ressort (104, 204) qui est conçu pour maintenir l'élément d'entraînement (103, 203) sur le corps de base (101, 201) de telle manière que l'élément d'entraînement (103, 203) soit précontraint lors du guidage longitudinal du dispositif de montage (100, 200) par rapport à la bande (33, 34) dans des positions à l'extérieur du creux (332, 342) dans la direction (Z) de la surface de la bande (33, 34) et à la position du creux (332, 342) s'accroche dans celui-ci, de telle manière que la bande (33, 34) soit entraînée par l'élément d'entraînement (103, 203) lors d'un autre guidage longitudinal du dispositif de montage (100, 200) .

2. Dispositif de montage selon la revendication 1, dans lequel le moyen de ressort (104, 204) est un ressort spiral disposé entre le corps de base (101, 201) et l'élément d'entraînement (103, 203).

3. Dispositif de montage selon l'une quelconque des revendications précédentes, dans lequel le moyen de ressort (204) est formé par un élément de liaison disposé entre le corps de base (201) et l'élément d'entraînement (203), et qui présente plusieurs articulations à corps solides (204.1, 204.2) espacées l'une de l'autre.

4. Dispositif de montage selon l'une quelconque des revendications précédentes, dans lequel l'élément d'entraînement (103, 203) présente une encoche (105, 205, 206) s'étendant dans la direction longitudinale (X) pour la fixation par emboîtement de la bande (33, 34) à l'élément d'entraînement (103, 203) perpendiculairement à la direction longitudinale (X).

5. Dispositif de montage selon l'une quelconque des revendications précédentes, dans lequel l'élément d'entraînement (203) présente sur deux côtés opposés l'un à l'autre une encoche (205, 206) s'étendant dans la direction longitudinale (X) pour la fixation par emboîtement de la bande (34) perpendiculairement à la direction longitudinale (X).

6. Dispositif de montage selon l'une quelconque des revendications précédentes 1 à 4, dans lequel l'élément d'entraînement (103) est formé sur un côté pour entraîner la bande (33) dans l'état accroché et l'élément d'entraînement (103) présente sur le côté opposé une face (107) inclinée par rapport à la direction longitudinale (X), qui est configurée de telle manière que, dans l'état accroché lors d'un déplacement longitudinal du dispositif de montage (100) par rapport à la bande (33) dans la direction de la face inclinée (107), la face inclinée (107) vienne en contact avec un bord de la bande (33) limitant le creux (332) et lors d'un nouveau déplacement longitudinal du dispositif de montage (100) un mouvement transversal soit appliqué à l'élément d'entraînement (103), qui décroche l'élément d'entraînement (103) hors du creux (332).

7. Ensemble de pièces, comprenant
- un support de règle graduée (1) avec au moins une rainure (43, 44) s'étendant dans la direction longitudinale (X) du support de règle graduée (1), qui présente une ouverture d'extrémité pour l'introduction d'une bande (33, 34);
- la bande (33, 34) avec au moins un creux (332, 342) et
- le dispositif de montage (100, 200) selon l'une quelconque des revendications précédentes pour l'introduction de la bande (33, 34) dans la rainure (43, 44).

8. Ensemble de pièces selon la revendication 7, dans lequel le support de règle graduée (1) est un profilé creux et la rainure (43, 44) est réalisée dans une face intérieure du profilé creux et le profilé creux présente une face de guidage extérieure (12) pour le guidage longitudinal du corps de base (101, 201) du dispositif de montage (100, 200) sur le profilé creux.

9. Ensemble de pièces selon la revendication 8, dans lequel le profilé creux présente une fente longitudinale (11) rendue étanche par des lèvres d'étanchéité et le dispositif de montage (200) est configuré de telle manière que l'élément d'entraînement (203) puisse être introduit dans le profilé creux dans une direction transversale à la direction longitudinale (X) en vue de l'introduction de la bande (34) à travers cette fente longitudinale (11).

10. Ensemble de pièces selon l'une quelconque des revendications précédentes 7 à 9, dans lequel la bande (34) est une bande graduée avec une graduation de mesure (341) lisible optiquement et l'ensemble de pièces comprend en outre une unité de lecture (2), qui est configurée de façon à lire la graduation de mesure (341), lorsque la bande graduée est introduite dans la rainure (44) du support de règle graduée (1).

11. Ensemble de pièces selon l'une quelconque des revendications précédentes 7 à 9, dans lequel la bande (33) est une bande de guidage et l'ensemble de pièces comprend en outre une unité de lecture (2), qui présente au moins un élément de guidage (23) avec lequel l'unité de lecture (2) est déplaçable de façon guidée sur la bande de guidage dans la direction longitudinale (X), lorsque la bande de guidage est introduite dans la rainure (43) du support de règle graduée (1).

12. Procédé d'introduction d'une bande (33, 34) dans une rainure (43, 44) s'étendant dans la direction longitudinale (X) d'un support de règle graduée en utilisant le dispositif de montage (100, 200) selon l'une quelconque des revendications précédentes 1 à 6, comportant les opérations suivantes:
- insertion de la bande (33, 34) dans la rainure (43, 44), à partir d'une ouverture d'extrémité de la rainure (43, 44);
- mise en contact du guide (102, 202) du corps de base (101, 201) du dispositif de montage (100, 200) avec une face de guidage (12) du support de règle graduée (1) et guidage longitudinal du dispositif de montage (100, 200) par rapport à la bande (33, 34), dans lequel l'élément d'entraînement (103, 203) du dispositif de montage (100, 200) en l'occurrence précontraint par le moyen de ressort (104, 204) glisse sur une surface de la bande (33, 34) et s'accroche dans un creux (332, 342) lorsqu'il atteint le creux (332, 342) de la bande (33, 34);
- entraînement de la bande (33, 34) par l'élément d'entraînement (103, 203) lors du guidage longitudinal du dispositif de montage (100, 200) sur le support de règle graduée (1) et ainsi lors de l'insertion de la bande (33, 34) dans la rainure (43, 44);
- décrochage de l'élément d'entraînement (103, 203) hors du creux (332, 342) de la bande (33, 34); et
- enlèvement du dispositif de montage (100, 200) du support de règle graduée (1).

13. Procédé selon la revendication 12, dans lequel le dispositif de montage (100) est réalisé selon la revendication 6 et dans lequel on effectue le décrochage de l'élément d'entraînement (103, 203) hors du creux (332) de la bande (33) par guidage longitudinal du dispositif de montage (100) dans la direction (-X) opposée à l'insertion et la face (107) inclinée par rapport à la direction longitudinale (X) vient en l'occurrence en contact avec le bord de la bande (33) limitant le creux (332) et on applique à l'élément d'entraînement (103) un mouvement transversal qui décroche l'élément d'entraînement (103) hors du creux (332) et lors d'un nouveau guidage longitudinal du dispositif de montage (100) l'élément d'entraînement (103) précontraint par le moyen de ressort (104) glisse sur la surface de la bande (33).

14. Procédé selon la revendication 12, dans lequel le support de règle graduée (1) est un profilé creux, qui présente une fente longitudinale (11) rendue étanche par des lèvres d'étanchéité et on introduit l'élément d'entraînement (202) du corps de base (201) dans le profilé creux dans une direction transversale à la direction longitudinale (X) dans l'espace intérieur du profilé creux à travers la fente longitudinale (11) en vue de la mise en contact du guide (202) du corps de base (201) avec la face de guidage (12) du support de règle graduée (1).
